(19) Europäisches Patentamt
European Patent Office
Office européen des brevets

(11) Publication number: **0 423 412 A1**

(12) # EUROPEAN PATENT APPLICATION

(21) Application number: **90100938.1**

(51) Int. Cl.[5]: **C08G 77/50**, C08L 83/14

(22) Date of filing: **17.01.90**

(30) Priority: **10.10.89 US 419430**

(43) Date of publication of application: **24.04.91 Bulletin 91/17**

(84) Designated Contracting States: **BE DE ES FR GB IT NL SE**

(71) Applicant: **HERCULES INCORPORATED**
**Hercules Plaza**
**Wilmington Delaware 19894(US)**

(72) Inventor: **Leibfried, Raymond Thomas**
**403 Dove Drive, Arbour Park**
**Newark, Delaware 19713(US)**

(74) Representative: **Lederer, Franz, Dr. et al**
**Lederer, Keller & Riederer Patentanwälte**
**Lucile-Grahn-Strasse 22**
**W-8000 München 80(DE)**

(54) **Organosilicon compositions.**

(57) An organosilicon polymer composition comprising alternating polycyclic polyene residues and polysiloxane or siloxysilane residues linked through carbon to silicon bonds, the polycyclic polyene residues being derived from polycyclic polyenes having at least two non-aromatic carbon-carbon double bonds in their rings and from about 5% to about 70% of the polysiloxane and siloxysilane residues being derived from linear, short chain ≡SiH terminated polysiloxanes, the remainder being derived from cyclic polysiloxanes or tetrahedral siloxysilanes, a process for making the polymer compositions including intermediate stable prepolymer compositions, and the use of the intermediate prepolymer compositions to make thermoset organosilicon polymers by curing the organosilicon prepolymer compositions in the presence of a hydrosilation catalyst.

EP 0 423 412 A1

# ORGANOSILICON COMPOSITIONS

This invention relates to organosilicon polymer compositions and processes for making the same.

High molecular weight organosilicon polymers, comprising alternating polycyclic hydrocarbon residues and cyclic polysiloxanes or tetrahedral siloxysilane residues linked through carbon to silicon bonds are disclosed in European Patent Application No. 87.112491.3.

They are the reaction product of (a) a cyclic polysiloxane or a tetrahedral siloxysilane containing at least two hydrosilane groups and (b) a polycyclic polyene, in which the ratio of carbon-carbon double bonds in the rings of (b) to hydrosilane groups in (a) is greater than 0.5:1 and up to 1.8:1, (for thermoplastic polymers, in the ranges of from 0.5:1 to about 0.7:1 and from 1.3:1 to 1.8:1, and for thermoset polymers from about 0.7:1 to about 1.3:1, more preferably from about 0.8:1 to about 1.1:1). At least one of the hydrosilane groups of (a) or one of the carbon-carbon double bonds of the rings of (b) has more than two reactive sites.

These organosilicon polymers have excellent physical, thermal and electrical properties and outstanding resistance to water, and the crosslinked polymers can be used to prepare shaped thermoset articles.

There is a need for organosilicon polymers that also exhibit a broader range of properties and physical forms than the known ones, including elastomeric materials and glassy polymers as well as conventional thermoset organosilicon polymers, and for a process for making such a variety of products by variations in the selection of reactants, reactant concentrations and reaction conditions. There is also a need for stable prepolymers that can be used for making such organosilicon polymers.

According to the invention, an organosilicon polymer composition comprising alternating polycyclic polyene residues and polysiloxane or siloxysilane residues linked through carbon to silicon bonds, is characterized in that the polycyclic polyene residues are derived from polycyclic polyenes having at least two non-aromatic carbon-carbon double bonds in their rings and from about 5% to about 70% of the polysiloxane and siloxysilane residues are derived from linear, short chain ≡SiH terminated polysiloxanes, the remainder being derived from cyclic polysiloxanes or tetrahedral siloxysilanes.

Also according to the invention, a process for making an organosilicon polymer composition according to the invention, comprising reacting (a) a cyclic polysiloxane or tetrahedral siloxysilane containing at least two ≡SiH groups and (b) a polycyclic polyene having at least two non-aromatic, carbon-carbon double bonds in its rings, at least one of the compounds (a) and (b) having more than two reactive sites, is characterized in that the cyclic polysiloxane or tetrahedral siloxysilane (a) and the polycyclic polyene (b) are reacted with (c) from about 5% to about 70%, based on the polysiloxanes and tetrahedral siloxysilanes, of a linear, short chain ≡SiH terminated polysiloxane and the ratio of the non-aromatic, non-conjugated carbon-carbon double bonds in the rings of the polycyclic polyene (b) to the ≡SiH groups in the cyclic polysiloxane or tetrahedral siloxysilane (a) and the linear, short chain ≡SiH terminated polysiloxane (c) is at least 0.4:1.

Preferably, the ratio of the number of the non-aromatic carbon-carbon double bonds in the rings of the polycyclic polyene (b) to the total number of ≡SiH groups in both the cyclic polysiloxane or tetrahedral siloxysilane (a) and the linear, short chain ≡SiH terminated polysiloxane (c) is in the range of 0.4:1 to 1.7:1, more preferably 0.8:1 to 1.3:1, and most preferably about 1:1, and the weight of the linear, short chain ≡SiH terminated polysiloxane (c) is preferably 10 to 50% of the total weight of the polysiloxane and siloxysilane compounds.

Also preferably the linear, short chain ≡SiH terminated polysiloxanes used in the process have the general formula:

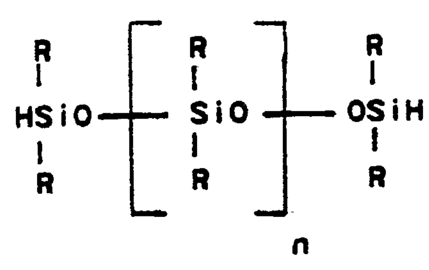

(I)

wherein n is 0 to 1000 and R is alkyl or aryl, preferably methyl or phenyl. These polysiloxanes tend to impart flexibility to the cured polymers, and with suitable control of proportions enable flexible, tough

thermosets and elastomeric forms of the invention to be produced.

In carrying out the process, the cyclic polysiloxane or tetrahedral siloxysilane is preferably mixed with the short chain ≡SiH terminated polysiloxane, polycyclic polyene, and a hydrosilation catalyst and the mixture is introduced into a mold, where the crosslinkable prepolymer compositions are formed and cured to make thermoset organosilicon polymers. The hydrosilation catalyst may be present in one of the reactants or injected directly into the mixer. The reaction proceeds rapidly, so that in minutes the polymer gels and the product can be removed from the mold.

It may be desirable to carry out the reaction in two stages, by partially reacting the components to form a conveniently storable prepolymer. Such prepolymers are generally in the form of flowable liquids that are stable at room temperatures. The thermoset crosslinked polymers are formed by further reacting the prepolymers in the presence of a hydrosilation catalyst. Such prepolymers may be made in three ways.

In one, the above-described reaction is carried forward until about 30 to about 70% of the SiH groups have reacted to form the stable prepolymer, and it is stopped at that point. The thermoset crosslinked polymers may then be formed by further reacting the prepolymer in the presence of a hydrosilation catalyst.

In a second and preferred two-stage embodiment, prepolymers are formed from polycyclic polyenes and cyclic polysiloxanes or tetrahedral siloxysilanes. The organosilicon prepolymers are made with a large excess of carbon-carbon double bonds available for reaction with ≡SiH groups; the ratio of carbon-carbon double bonds in the rings of the polycyclic polyenes used to form the polycyclic polyene residues (b) to ≡SiH groups in the polysiloxanes and siloxysilanes used to form the polysiloxane/siloxysilane residues (b) is greater than 1.8:1, preferably greater than 1.8:1 and up to 5:1, and most preferably greater than 1.8:1 and up to 2.2:1.

The organosilicon prepolymers of this embodiment may be prepared by mixing the reactants and the platinum catalyst and bringing the mixture to a temperature at which the reaction is initiated and proper temperature conditions are thereafter maintained to complete the prepolymer reaction. With such a large ratio of double bonds to ≡SiH groups available for reaction, the reaction will stop at the prepolymer stage when greater than 90% of the ≡SiH groups are consumed.

At a ratio of double bonds to ≡SiH of 2:1 it is assumed that stoichiometrically all ≡SiH bonds are reacted with carbon-carbon double bonds and that the prepolymer is stable against further reaction. Prepolymers having such a stoichiometric ratio are the most stable prepolymers made by this embodiment, and tend to avoid the presence of unreacted polycyclic polyenes which is undesirable because of their odor. (If unreacted polycyclic polyenes are present, they can be stripped, e.g., using a rotoevaporator, to form odorless compositions).

The thermoset crosslinked polymers may then be formed from these preferred prepolymers by adding linear, short chain ≡SiH terminated polysiloxanes and, optionally, additional amounts of cyclic polysiloxanes or tetrahedral siloxysilanes, to provide the preferred range of 0.4:1 to 1.7:1 for the ratio of the non-aromatic carbon-carbon double bonds to the ≡SiH groups, and curing the mixture in the presence of a hydrosilation catalyst. In this embodiment, the linear, short chain ≡SiH terminated polysiloxanes are preferably used in an amount 10 to 50%, by weight of all the polysiloxanes and siloxysilanes used to form the product.

All the prepolymer compositions made by the process of this invention are generally in the form of flowable liquids that are stable indefinitely at room temperature.

In the third two-stage embodiment of the invention, which is a minor modification of the second preferred embodiment, the prepolymers are formed from a mixture in which a part of the cyclic polysiloxanes or tetrahydral siloxysilanes is replaced by linear, short chain ≡SiH terminated polysiloxanes, and in which the ratio of the number of the non-aromatic carbon-carbon double bonds in the rings of the polycyclic polyene (b) to the total number of ≡SiH groups in the cyclic polysiloxanes or tetrahedral siloxysilanes (a) and (c) is greater than 1.8:1. When forming a polymer with the desired combination of properties from such a prepolymer, the linear, short chain ≡SiH terminated polysiloxanes thermoset crosslinked polymers added in the second two-stage embodiment may optionally be completely replaced by polycyclic polyenes and cyclic polysiloxanes or tetrahedral siloxysilanes.

Also according to the invention is the use of the organosilicon prepolymer compositions made by the said process to make organosilicon polymers by curing the organosilicon prepolymer compositions in the presence of a hydrosilation catalyst. The prepolymer composition and a hydrosilation catalyst are mixed and the mixture is cured to form thermoset crosslinked polymers

The final reaction may be carried out in an extruder, mold or oven, or one of the the prepolymer compositions may be applied directly to a substrate or part and cured in situ . For the more reactive compositions, if the reaction upon mixing is too fast and viscosity increases too rapidly, preventing proper mold filling, a cure rate retardant or mild complexing agent, such as tetramethylethylenediamine, can be

added to control the room temperature reaction in a conventional manner. This complex disassociates at temperatures greater than 100 °C to let curing proceed. With stronger complexing agents, such as phosphorus compounds, curing temperatures above 150 °C may be required.

Although a hydrosilation reaction via the carbon-carbon unsaturation of the polycyclic polyene rings and the ≡SiH group is the primary polymerization and crosslinking mechanism in all of the methods described, other types of polymerization and crosslinking may also take place as the curing temperature is increased. These may include, e.g., oxidative crosslinking, free radical polymerization (olefin addition reactions) and condensation of ≡SiH with silanols to form siloxane bonds.

Preferably, the polycyclic polyenes that are used in the process are selected from the group consisting of cyclopentadiene oligomers (e.g;, dicyclopentadiene, tricyclopentadiene and tetracyclopentadiene), bicycloheptadiene and its diels-alder oligomers with cyclopentadiene (e. g., dimethanohexahydronaphthalene), and substituted derivatives of any of these, e.g., methyl dicyclopentadiene. Preferred are bicycloheptadiene, dimethanohexahydronaphthalene, dicyclopentadiene and tricyclopentadiene, with the most preferred being bicycloheptadiene. Two or more polycyclic polyenes can be used in combination.

Any cyclic polysiloxane or tetrahedral siloxysilane with two or more hydrogen atoms bound to silicon will enter into the reaction. Cyclic polysiloxanes useful in forming the products of this invention have the general formula:

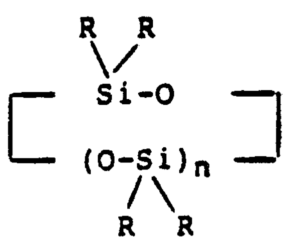

(II)

wherein R is hydrogen or a substituted or unsubstituted alkyl, alkoxy, aromatic or aryloxy radical, n is an integer from 3 to about 20, and R is hydrogen on at least two of the silicon atoms in the molecule.

Examples of reactants of Formula (II) include, e.g., tetramethylcyclotetrasiloxane, pentamethylcyclopentasiloxane, hexamethylcyclohexasiloxane, tetraethylcyclotetrasiloxane, cyclotetrasiloxane, tetraphenylcyclotetrasiloxane, tetraoctylcyclotetrasiloxane and hexamethylcyclotetrasiloxane.

The most commonly occurring members of this group are tetramethylcyclotetrasiloxane, pentamethylcyclopentasiloxane, and tetra-, penta- and hexamethylcyclohexasiloxanes, with tetramethyltetracyclosiloxane being preferred. In most cases, however, the material is a mixture of a number of species wherein n can vary widely. Commercial mixtures may contain up to about 20% (in purer forms as low as 2%) low molecular weight linear siloxanes, such as heptamethyltrisiloxane, octamethyltetrasiloxane, hexamethyl disiloxane, etc.

The tetrahedral siloxysilanes are represented by the general structural formula:

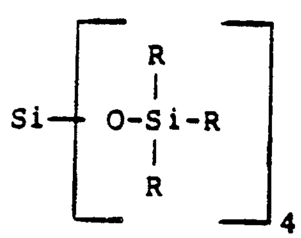

(III)

wherein R is as defined above and is hydrogen on at least two of the silicon atoms in the molecule.

Examples of reactants of Formula (III) include, e.g., tetrakisdimethylsiloxysilane, tetrakisdiphenylsiloxysilane, and tetrakisdiethylsiloxysilane. The tetrakisdimethylsiloxysilane is the best known and preferred species in this group.

The reactions for forming the organosilicon prepolymers and crosslinked polymers can be promoted thermally or by the addition of a hydrosilation catalyst or radical generators such as peroxides and azo compounds. Hydrosilation catalysts include metal salts and complexes of Group VIII elements. The

preferred hydrosilation catalysts contain platinum.

The reactions for forming the organosilicon prepolymer compositions and crosslinked polymer proceed readily in the presence of a platinum-containing catalyst. The preferred catalyst, in terms of both reactivity and cost, is chloroplatinic acid ($H_2PtCl_6.6H_2O$). Catalyst concentrations of 0.0005 to about 0.05% by weight, based on weight of the reactants, will effect smooth and substantially complete polymerization. Other, platinum compounds can also be used to advantage in some instances, such as $PtCl_2$ and dibenzonitrile platinum dichloride. Platinum on carbon is also effective for carrying out high temperature polymerizations. The catalysis of hydrosilation is well known, for instance from Advances in Organometallic Chemistry , Vol. 17, beginning on page 407.

The basic reaction is exothermic, and without using heat removal equipment (cooling coils or reflux condenser) the formation of the prepolymers is generally carried out for up to twenty-four hours or longer, depending on the reaction mass. In a continuous process with adequate heat removal, the earliest stages of the reaction can be carried out quickly.

Additives such as fillers and pigments are readily incorporated. Carbon black, vermiculite, mica, wollastonite, calcium carbonate, sand, glass spheres, glass beads, ground glass and waste glass are examples of fillers which can be incorporated. Fillers can serve either as reinforcement or as fillers and extenders to reduce the cost of the molded product. Glass spheres are especially useful for preparing low density composites. When used, fillers can be present in amounts up to about 80%. Stabilizers and antioxidants are useful to maintain storage stability of the formulations and thermal oxidative stability of the final product. Coupling agents such as vinyl silane and related compounds may be used to wet the glass and promote adhesion of the resin to the glass.

For instance, chopped glass fibers can be slurried in a stabilized liquid blend (prepolymer and added polysiloxane or siloxysilane) in compounding equipment having a blade stirrer(s) or screw mixer(s). It is advisable to deaerate such a slurry under vacuum before injecting it into a mold.

Fibers, e.g., glass fibers, are wetted very well by the liquid blends, making the blends excellent matrix materials for structures. Thus, the prepolymer composition can be mixed with cyclic polysiloxanes, tetrahedral siloxysilanes and/or linear, short chain ≡SiH terminated polysiloxanes to form a blend, a mold containing the requisite staple or continuous filament can be charged with the blend, and the blend can be cured to form the desired composite structure. Fiber in fabric form can also be employed. Fiber reinforced composites of the polymers of this invention can contain as much as 80%, preferably 30 to 60%, by weight, of fibrous reinforcement, and, when fully cured, typically exhibit extremely high tensile and flexural properties and also excellent impact strength.

The low-viscosity fluid blends are well suited for use in reaction molding systems, where rapid mixing and flow into a mold is important. The low viscosity and affinity for glass permits filling of molds containing glass reinforcement. The high reactivity of the blends gives a fast gel time at reasonable temperatures so that molded parts can be quickly taken out of the mold and cured further outside the mold.

The thermoset polymers fabricated from the prepolymer compositions and blends described herein are useful in molded electronic parts, electrical connectors, electronic and electrical part encapsulation, etc. They can be molded into intricate shapes having thermal stability, low moisture absorbance and fire resistance (high char yield at 1000 °C in air).

The thermoset polymers are also useful as structural adhesives, curable in situ, to form strong bonds due to a high affinity of ≡SiH derived silanol groups for polar metal surfaces, especially oxidized metal surfaces. The elastomeric embodiments make excellent potting compounds for electronic applications since they can be cured in situ and have a low equilibrium water content (0.01 - 0.1%) after humid aging (100% relative humidity (RH), 1 week).

The glass filled, thermoset products which have been polymerized to the glassy state are characterized by high physical properties, i.e., high modulus and high tensile strength and good flex properties. They are fire resistant, burn very slowly when subjected to a flame, and self-extinguish when the flame is removed.

Thermal properties of the thermoset polymers are outstanding. The glass transition temperature (Tg) of a fully cured thermoset polymer is about 200 °C or higher. Thermal stability is excellent with usually less than 10% weight loss at 500 °C during Thermogravimetric analysis. At 1000 °C in air, they leave about 50% of a ceramic residue.

The thermoset polymers are also resistant to oxidation at ordinary temperatures. Above 200 °C, oxidative crosslinking of silicon portions of the molecule appears to take place, resulting in the formation of a dark siliceous outer layer. This oxidized outer layer appears to impede the oxidative degradation of the bulk polymer.

The following examples are presented to demonstrate this invention. They are not intended to be limiting. Therein, all percentages, parts, etc., are by weight, unless otherwise indicated.

Example 1

This example shows preparation of an organosilicon prepolymer useful in preparing crosslinked polymers according to this invention.

With continuous mixing, 0.031 parts bisbenzonitrile platinum dichloride, 120.4 parts (2.0 mole, 4.0 equivalents (eq)) bicycloheptadiene, and 120.4 parts (0.05 mole, 2.0 eq) methylhydrocyclosiloxanes (a mixture of tetramethylcyclotetrasiloxane, pentamethylcyclopentasiloxane, hexamethylcyclohexasiloxane, available from Huls/Petrarch, Bristol, PA) were added to a reaction chamber and heated gradually to 100 °C over a period of seven hours and held at 100 °C for ten hours. A yield of 298.5 parts (98%) of prepolymer was obtained.

IR analysis was conducted and the product was found not to have a peak at 2140 $cm^{-1}$ (SiH peak), indicating that the hydrosilation reaction was complete.

Proton NMR analysis showed that SiH and bicycloheptadiene double bonds had reacted and the expected Si-C bonds had formed (5.8-6.0 ppm) giving bicycloheptene substituted methylhydrocyclosiloxane as a pourable fluid prepolymer.

Example 2

This example shows preparation of an organosilicon polymer using the organosilicon prepolymer composition of Example 1.

The bicycloheptadiene/methylhydrocyclosiloxanes prepolymer of Example 1 (5.1 parts) was stirred with hexamethyltrisiloxane (≡SiH terminated) (3.5 parts). Then, platinum catalyst (0.01 parts) was added with stirring. The mixture was deaerated under vacuum and poured into a slotted mold (3 x 1/2 x 1/8 inches), and cured at 120 °C for 2 hours and 150 °C for six hours. The cured polymer had a glass transition at 39 °C determined by differential scanning calorimetry. Thermogravimetric analysis was carried out in a Du Pont Thermal Analyzer (E. I. du Pont de Nemours & Company, Inc., Wilmington, DE) at 20 °C/minute, indicating a 10% loss in weight at 500 °C in air and nitrogen, demonstrating the excellent stability of the polymer at high temperatures.

Example 3

This example shows preparation of an organosilicon polymer.

The bicycloheptadiene/methylhydrocyclosiloxanes prepolymer (5.1 parts) of Example 1 was stirred with ≡SiH terminated polydimethylsiloxane (Huls/Petrarch PS-537) (12.0 parts). Then, platinum catalyst (0.01 parts) was added with stirring. The compatible mixture was deaerated and poured into a slotted mold (3 x 1/2 x 1/8 inches) and cured at 120 °C for 2 hours and 150 °C for six hours. The cured polymer had a glass transition at -34 °C determined by differential scanning calorimetry. Thermogravimetric analysis indicated a 10% loss in the cured polymer at 500 °C in nitrogen and 490 °C in air, demonstrating the excellent stability of the polymer at high temperatures.

Example 4

This example shows preparation of an organosilicon polymer from the prepolymer composition of Example 1.

The bicycloheptadiene/methylhydrocyclosiloxanes prepolymer composition of Example 1 (15.00 parts) was stirred with tetramethyldisiloxane (6.61 parts). The compatible mixture was a fluid which was degassed under aspirator vacuum and poured into a slotted mold (3 x 1/2 x 1/8 inches) and cured at 50 °C for 2 hours, 120 °C for 2 hours and 150 °C for 6 hours. The cured polymer had 10% weight loss at 480 °C in nitrogen and 475 °C in air, showing excellent thermal and thermal oxidative stability. The polymer was cured further at 200 °C for 2 hours and 250 °C for 2 hours. The glass transition temperature of the cured polymer was 79 °C determined by thermal mechanical analysis (Du Pont Thermomechanical Analyzer with

a 100 mg load, and expansion probe at 10° C/minute). This corresponded closely with the temperature where the complex modulus (G′) decreased at the glass transition (80° C) determined by dynamic mechanical analysis. The complex modulus of the polymer was 116,000 psi at 25° C and 87,000 psi at 75° C.

## Example 5

A catalyst comprising 0.0033 parts platinum (0.1 M chloroplatinic acid in isopropanol) was added to 30.23 parts dicyclopentadiene and heated to 55° C for 1 hour to form a catalyst complex. Then 6 parts toluene was added to the solution.

The above solution was added gradually to a stirred mixture of 17.48 parts 1,1,3,3,5,5-hexamethyltrisiloxane (Huls/Petrarch, H7322), 18.40 parts methylhydrocyclosiloxanes (Huls/Petrarch, M8830) and 9.25 parts of toluene. The addition took 72 minutes and cooling was applied to keep the temperature of the reaction in the 49-61° C range. The reaction was allowed to cool and was stirred at room temperature for two days. The toluene was stripped from the prepolymer at 40° C and 0.5 mmHg. The prepolymer was a low viscosity, clear fluid (525 centistokes at room temperature). All the norbornene double bonds of DCPD were found to be reacted (proton NMR).

The prepolymer was poured into a mold (3 x 1/2 x 118 inches) and cured at 100° C for 1 hour and 150° C for 4 hours. A clear polymer, which was slightly flexible and appeared to be tough resulted.

## Claims

1. An organosilicon polymer composition comprising alternating polycyclic polyene residues and polysiloxane or siloxysilane residues linked through carbon to silicon bonds, characterized in that the polycyclic polyene residues are derived from polycyclic polyenes having at least two non-aromatic carbon-carbon double bonds in their rings and from about 5% to about 70% of the polysiloxane and siloxysilane residues are derived from linear, short chain ≡SiH terminated polysiloxanes, the remainder being derived from cyclic polysiloxanes or tetrahedral siloxysilanes.

2. An organosilicon polymer composition as claimed in claim 1, further characterized in that the short chain ≡SiH terminated polysiloxane has the general formula:

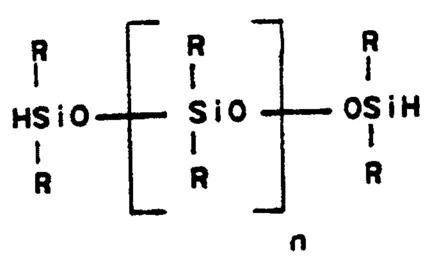

(I)

in which n is 0 to 1000 and R is alkyl or aryl.

3. An organosilicon polymer composition as claimed in claim 2, further characterized in that R is methyl or phenyl.

4. An organosilicon polymer composition as claimed in any of the preceding claims, further characterized in that the ratio of the number of the non-aromatic carbon-carbon double bonds in the rings of the polycyclic polyene (b) to the total number of ≡SiH groups in both the cyclic polysiloxane or tetrahedral siloxysilane (a) and the linear, short chain ≡SiH terminated polysiloxane (c) is in the range of 0.4:1 to 1.7:1.

5. An organosilicon polymer composition as claimed in claim 4, further characterized in that the said ratio is 0.8:1 to 1.3:1.

6. An organosilicon polymer composition as claimed in any of the preceding claims, further characterized in that the weight of the linear, short chain ≡SiH terminated polysiloxane (c) is 10 to 50% of the total weight of the polysiloxane and siloxysilane compounds.

7. An organosilicon polymer composition as claimed in any of the preceding claims, further characterized in that the cyclic polysiloxane or tetrahedral siloxysilane is a cyclic polysiloxane comprising tetramethylcyclotetrasiloxane, pentamethylcyclopentasiloxane, hexamethylcyclohexasiloxane, tetraethylcyclotetrasiloxane, cyclotetrasiloxane, tetraphenylcyclotetrasiloxane, tetraoctylcyclotetrasiloxane or hexamethyltetracyclosiloxane.

8. An organosilicon polymer composition as claimed in any of claims 1 to 6, further characterized in that the the cyclic polysiloxane or tetrahedral siloxysilane is a tetrahedral siloxysilane comprising tetrakisdimethylsiloxysilane, tetrakisdiphenylsiloxysilane, or tetrakisdiethylsiloxysilane.

9. An organosilicon polymer composition as claimed in any of the preceding claims, further characterized in that the polycyclic polyene is, or is a substituted derivative of, a cyclopentadiene oligomer, a dimethanohexahydronaphthalene, bicycloheptadiene, or a diels-alder oligomer of bicycloheptadiene with cyclopentadiene.

10. An organosilicon polymer composition as claimed in claim 9, further characterized in that the polycyclic polyene is dicyclopentadiene, tricyclopentadiene, bicycloheptadiene, or dimethanohexahydronaphthalene.

11. An organosilicon polymer composition as claimed in any of the preceding claims further characterized in that about 30 to about 70% of the ≡SiH groups in the cyclic polysiloxane, tetrahedral siloxysilane and linear, short chain ≡SiH terminated polysiloxane are reacted.

12. A process for making an organosilicon polymer composition as claimed in claim 1, comprising reacting (a) a cyclic polysiloxane or tetrahedral siloxysilane containing at least two ≡SiH groups and (b) a polycyclic polyene having at least two non-aromatic, carbon-carbon double bonds in its rings, at least one of the compounds (a) and (b) having more than two reactive sites, is characterized in that the cyclic polysiloxane or tetrahedral siloxysilane (a) and the polycyclic polyene (b) are reacted with (c) from about 10% to about 70%, based on the cyclic polysiloxanes or tetrahedral siloxysilanes, of a linear, short chain ≡SiH terminated polysiloxane and the ratio of the non-aromatic, non-conjugated carbon-carbon double bonds in the rings of the polycyclic polyene (b) to the ≡SiH groups in both the cyclic polysiloxane or tetrahedral siloxysilane (a) and the linear, short chain ≡SiH terminated polysiloxane (c) is at least 0.4:1.

13. A process for making an organosilicon polymer composition as claimed in claim 12, further characterized in that about 30 to about 70% of the ≡SiH groups in the cyclic polysiloxane, tetrahedral siloxysilane and linear, short chain ≡SiH terminated polysiloxane are reacted.

14. Use of the organosilicon polymer composition of claim 11 to make a thermoset organosilicon polymer by curing the organosilicon polymer composition in the presence of a hydrosilation catalyst.

15. Use of the organosilicon polymer composition to make a thermoset organosilicon polymer as claimed in claim 14, further characterized in that the organosilicon polymer composition is cured in a mold in the presence of fibers.

European Patent Office

# EUROPEAN SEARCH REPORT

Application Number

**EP 90 10 0938**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 259 711 (HERCULES)<br>* whole document * | 1-15 | C 08 G 77/50<br>C 08 L 83/14 |
| Y | EP-A-0 282 927 (HERCULES)<br>* whole document * | 1-15 | |
| A | FR-A-2 595 364 (NIPPON PETROCHEMICALS)<br>* pages 9-12, formulas; page 13, lines 15-21; claim * | 1,9,10,14 | |
| A | JOURNAL OF POLYMER SCIENCES vol. 16, no. 2, February 1978, pages 483-490, New York, US; Y.K. KIM et al.: "Polycycloalkylene-Siloxane Polymers: Synthesis and Thermal Study"<br>* page 483, formulas * | 1 | |

TECHNICAL FIELDS SEARCHED (Int. Cl.5)

C 08 G
C 08 L

The present search report has been drawn up for all claims

| Place of search | Date of completion of search | Examiner |
|---|---|---|
| Berlin | 30 January 91 | HOEPFNER W.W.G. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document